# EUROPÄISCHE PATENTANMELDUNG

(11) **EP 3 501 786 A1**
(43) Veröffentlichungstag der Anmeldung: **26.06.2019**
(21) Anmeldenummer: 18214218.2
(22) Anmeldetag: 22.06.2012
(51) Int. Cl.: B29C 49/12, B29C 49/42, B29C 49/46, B29C 49/06, B29C 49/36

(54) **VORRICHTUNG UND VERFAHREN ZUM UMFORMEN VON KUNSTSTOFFVORFORMLINGEN ZU KUNSTSTOFFBEHÄLTNISSEN MIT ABGEDICHTETER RECKSTANGENBEWEGUNG**

(30) Priorität: 24.06.2011 DE 102011105744
(62) Teilanmeldung aus: 12173180.6
(71) Anmelder: Krones AG, 93073 Neutraubling (DE)
(72) Erfinder: Geltinger, Florian, 93073 Neutraubling (DE); Söllner, Jürgen, 93073 Neutraubling (DE); Kerim, Yasin, 93073 Neutraubling (DE)
(74) Vertreter: Bittner, Bernhard

(57) **Zusammenfassung**

Eine Vorrichtung zum Umformen von Kunststoffvorformlingen (10) zu Kunststoffbehältnissen (10a) mit wenigstens einer Blasstation (8), welche an einer beweglichen Transporteinrichtung (2) angeordnet ist, wobei die Blasstation (8) eine Blasform (6) aufweist und diese Blasform (6) einen Hohlraum ausbildet, in dessen Innerem die Kunststoffvorformlinge (10) durch Beaufschlagung mit einem gasförmigen Medium zu den Kunststoffbehältnissen (10a) expandierbar sind, mit einer Beaufschlagungseinrichtung (12), welche die Kunststoffvorformlinge (10) zu deren Expansion mit dem gasförmigen Medium beaufschlagt und mit einem Reinraum (20), der die Blasstation (8) zumindest teilweise umgibt, und mit einer Reckeinheit (60), welche die Kunststoffvorformlinge (10) entlang deren Längsrichtung (Lr) dehnt, wobei die Reckeinheit (60) eine gegenüber den Kunststoffvorformlingen (10) bewegbare Reckstange (5) aufweist, die in die Kunststoffvorformlinge (10) einführbar ist und die Reckeinheit (60) weiterhin eine Antriebseinrichtung (122) zum Bewegen der Reckstange (5) entlang deren Längsrichtung (Lr) aufweist. Erfindungsgemäß weist die Blasstation (8) einen Aufnahmeraum (64) mit wenigstens einer Wandung (68) zum Aufnehmen der Reckstange (5) auf und die Reckstange (5) ist gegenüber diesem Aufnahmeraum (64) beweglich und die Antriebseinrichtung (122) vorteilhaft wenigstens zeitweise außerhalb dieses Aufnahmeraums (64) angeordnet, wobei in diesem Aufnahmeraum (64) ein gasförmiges Medium mit einem Druck (P1) aufnehmbar ist, der oberhalb eines Umgebungsdrucks (Pu) einer unsterilen Umgebung dieses Aufnahmeraums (64) liegt.

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Üblicherweise weist eine derartige Vorrichtung zum Umformen von Kunststoffvorformlingen zu Kunststoffbehältnissen, im folgenden auch Streckblasmaschine genannt, mehrere Blasstationen auf, in denen die Vorformlinge durch Anlegen eines Innendrucks zu Kunststoffflaschen geblasen werden. Diese fertig geblasenen Kunststoffbehältnisse sind nach diesem Prozess verschmutzt und müssen hinterher aufwändig gereinigt werden, um bestimmte Hygienestandards einzuhalten.

Eine wichtige Komponente einer derartigen Streckblasmaschine beziehungsweise einer Blasstation ist die Reckeinheit. Diese lagert und führt die Reckstange. Die Reckstange fährt in den Kunststoffvorformling ein und reckt ihn bis zum Formboden aus. Der Blasdruck formt endgültig die Flasche und die Reckeinheit fährt die Reckstange wieder aus der fertigen Flasche zurück.

Aus dem Stand der Technik ist es bekannt, dass die Reckeinheit an einer Linearführung über einen Momentenschlitten beziehungsweise Reckschlitten verbunden und geführt ist. Dies ist bedeutsam, da die Reckstange üblicherweise über einen sehr langen Hub, der bis zu 450 mm reicht, sehr genau zentrisch geführt werden muss. Der Reckschlitten wird dabei in seiner bekannten Ausgestaltung von einem Linearmotor angetrieben. Dieser ist zentrisch zur Reckachse gelagert und fährt mit einer sehr hohen Geschwindigkeit aus und ein.

Auch ist es bekannt, dass die Reckstangen über eine Führungskurve bewegt werden.

Im Stand der Technik ist die Mechanik in einem unreinen Raum ohne jeglichen Schutz vor Verschmutzungen. Dies bedeutet, dass die fertig geformte Flasche verschmutzt ist und daher in einem eigenen Modul, wie einem Rinser hygienisch gereinigt werden muss.

Aus der WO 2010/020529 A2 ist eine sterile Blasmaschine bekannt. Der Gegenstand dieser Druckschrift wird hiermit durch Bezugnahme vollumfänglich auch zum Gegenstand der vorliegenden Anmeldung gemacht.

Derzeit sind keine Streckblasmaschinen bekannt, welche Kunststoffflaschen produzieren, die aseptisch geblasen werden. Die Mechanik und der "unreine Ablauf" des Reckprozesses sind bei allen aktuellen Maschinen auf dem Markt ähnlich.

Der vorliegenden Erfindung liegt daher die Aufgabe zugrunde, eine Streckblasmaschine zur Verfügung zu stellen, welche insbesondere auch eine hygienisch konstruierte Reckeinheit aufweist.

Diese Aufgabe wird erfindungsgemäß durch den Gegenstand der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist wenigstens eine Blasstation auf, welche an einer beweglichen Transporteinrichtung angeordnet ist, wobei die Blasstation eine Blasform aufweist und diese Blasform einen Hohlraum ausbildet, in dessen Inneren die Kunststoffvorformlinge durch Beaufschlagung mit einem gasförmigen Medium zu den Kunststoffbehältnissen expandierbar sind. Weiterhin weist die Vorrichtung eine Beaufschlagungseinrichtung auf, welche die Kunststoffvorformlinge zu deren Expansion mit einem gasförmigen Medium beaufschlagt sowie einen Reinraum, der die Blasstation zumindest teilweise umgibt und eine Reckeinheit, welche die Kunststoffvorformlinge entlang deren Längsrichtung dient. Dabei weist die Reckeinheit eine gegenüber den Kunststoffvorformlingen bewegbare Reckstange auf, die in die Kunststoffvorformlinge einführbar ist und die Reckeinheit weist weiterhin eine Antriebseinrichtung zum Bewegen der Reckstange entlang deren Längsrichtung auf.

Erfindungsgemäß weist die Blasstation einen Aufnahmeraum mit wenigstens einer Wandung zum Aufnehmen der Reckstange auf, und die Reckstange ist gegenüber diesem Aufnahmeraum beweglich, wobei die Antriebseinrichtung vorteilhaft wenigstens zeitweise außerhalb dieses Aufnahmeraums angeordnet ist und wobei in diesem Aufnahmeraum ein gasförmiges Medium mit einem vorgegebenen Druck P aufnehmbar ist, der oberhalb eines Umgebungsdrucks in einer unsterilen Umgebung dieses Aufnahmeraums liegt. Vorteilhaft ist in dem Aufnahmeraum ein steriles Medium und insbesondere Sterilluft angeordnet.

Bei der Antriebseinrichtung zum Bewegen der Reckstange kann es sich beispielsweise um einen Linearmotor beziehungsweise Elektromotor oder einen mechanischen oder hydraulischen Antrieb handeln. Es wäre jedoch auch möglich, dass der Antrieb der Reckstange über eine Kurvenrolle und eine entsprechende insbesondere stationär angeordnete Führungskurve erfolgt. Diese Führungskurve kann dabei beispielswiese außerhalb des Reinraums angeordnet sein. Bei der Transporteinrichtung, welche die Blasstation beziehungsweise die Blasform transportiert, kann es sich beispielsweise um ein drehbar angeordnetes Blasrad handeln, an dem eine Vielzahl derartiger Blasstationen angeordnet ist. Vorteilhaft ist auch die Beaufschlagungseinrichtung innerhalb des Reinraums angeordnet und vorteilhaft gegenüber den zu expandierenden Behältnissen bewegbar.

Bei einer weiteren vorteilhaften Ausführungsform ist die Reckstange an einer Halteeinrichtung angeordnet und diese Halteeinrichtung erstreckt sich durch eine Wandung des Aufnahmeraums hindurch. Über die Halteeinrichtung kann dabei die Reckstange mit der Antriebseinrichtung wie beispielsweise einem Schlittenelement oder dergleichen in Verbindung stehen. Es wird daher vorgeschlagen, dass die Reckstange von dem verschmutzten Umfeld so getrennt wird, dass sie mit keinen Keimen oder anderen Verschmutzungen in Berührung kommen kann.

Weiterhin wird durch die erfindungsgemäße Ausführungsform gleichwohl eine leichte Zugänglichkeit bei der zyklischen Reinigung der hygienischen Einheiten ermöglicht. Mittels der erfinderischen Vorrichtung ist es möglich, die Kunststoffvorformlinge hygienisch zu verformen.

Bei einer weiteren vorteilhaften Ausführungsform erstreckt sich die gesamte Halteeinrichtung durch eine in der Wandung des Aufnahmeraums gebildete Öffnung. Diese Öffnung kann dabei beispielsweise schlitzförmig ausgebildet sein. So ist es möglich, dass der Aufnahmeraum die Reckstange vollumfänglich mit Ausnahme des besagten Schlitzes umgibt. So kann der Aufnahmeraum beispielsweise zylinderförmig mit dem besagten Schlitz ausgebildet sein. Weiterhin wäre es möglich, dass eine Abdichteinrichtung vorgesehen ist, welche den Schlitz in denjenigen Bereichen, in denen die Halteeinrichtung nicht angeordnet ist, jeweils abdichtet. Dabei kann es sich um eine gleitende Dichtung handeln, welche jeweils diejenigen Bereiche abdichtet, in denen die besagte Halteeinrichtung nicht vorliegt beziehungsweise angeordnet ist.

Bei einer weiteren vorteilhaften Ausführungsform weist die Vorrichtung einen mittels wenigstens einer Wandung gegenüber der Umgebung abgetrennten Übergangsraum auf, wobei dieser Übergangsraum in Strömungsverbindung mit dem oben erwähnten Aufnahmeraum steht. So ist es beispielsweise möglich, dass die Reckstange in dem Aufnahmeraum beziehungsweise einer Kammer verläuft, welche mit steriler Luft beaufschlagt ist. Der Druck in diesem Aufnahmeraum ist dabei höher als der Luftdruck der unsterilen Umgebung. So kann dieser höhere sterile Druck aus einer Atmosphäre resultieren, die auch dazu dient, um die darunter angeordneten Blasformen mit steriler Luft zu versorgen.

An der besagten Kammer beziehungsweise dem Aufnahmeraum kann eine zweite Kammer, der oben erwähnte Übergangsraum, angebracht sein. In diesem Übergangsraum herrscht bevorzugt ein niedrigerer Druck als in dem Aufnahmeraum und der unsterilen Umgebungsluft. Diese beiden Kammern, d.h. der Aufnahmeraum und der Übergangsraum sind dabei vorzugsweise mit einem gemeinsamen einseitig durchgehenden Schlitz, durch den die sterile Luft von dem Aufnahmeraum zu dem Übergangsraum strömen kann, verbunden. Der Übergangsraum weist zusätzlich vorteilhaft einen weiteren Schlitz auf, der bevorzugt offen zur Atmosphäre hinführt.

Durch die beiden erwähnten Schlitze und den Unterdruck in dem Übergangsraum ergibt sich eine Strömungsbewegung in Richtung des Übergangsraums. Eine ständige Bewegung der Luft von dem Aufnahmeraum zu dem Übergangsraum verhindert eine Kontamination der Reckstange. Die ständig bewegte Luft von der unreinen Atmosphäre zu dem Übergangsraum verhindert weiterhin ein Austreten von mit Wasserstoffperoxid angereicherter Luft in die Atmosphäre. Eine derartige Anordnung kann auch als Absaugorgel bezeichnet werden.

Damit ist vorteilhaft der Druck in den Übergangsraum geringer als in der Umgebung sowie dem Aufnahmeraum, sodass der insgesamt niedrigste Druck in dem besagten Übergangsraum herrscht.

Vorteilhaft sind auch die beiden Schlitze beziehungsweise Öffnungen und des Aufnahmeraums und des Übergangsraums derart angeordnet, dass sie sich entgegen der Bewegungsrichtung der Blasstationen befinden, so dass ein direktes Einleiten von Keimen in den Aufnahmeraum verhindert wird.

Bei einer weiteren vorteilhaften Ausführungsform ist zwischen dem Aufnahmeraum und dem Übergangsraum eine Wandung angeordnet.

Wie oben erwähnt, kann die Reckstange über ein so genanntes Reckschwert, d.h. die Halteeinrichtung gehalten werden und läuft innerhalb dieses Aufnahmeraums. Die Halteeinrichtung beziehungsweise das Reckschwert kann von einem Linearmotor angetrieben werden und ragt vorteilhaft durch die beiden oben erwähnten Schlitze hindurch und ist besonders bevorzugt in der horizontalen Ebene verstellbar gelagert. Durch diese Anordnung verläuft die Reckstange nur in der sterilen Zone und bleibt daher aseptisch rein.

Vorteilhaft ist in entsprechender Weise zu diesem Reckschwert beziehungsweise der Halteeinrichtung auch der Blasschlitten aufgebaut. An diesem Blasschlitten kann die Blasdüse angeordnet sein, die ebenfalls zum Expandieren der Kunststoffvorformlinge auf diese aufgesetzt wird. Der Blasschlitten wird bevorzugt unterhalb der Reckstange vorteilhaft an derselben Linearführung geführt. Ein entsprechendes Schwert des Blasschlittens reicht vorteilhaft ebenfalls durch den Aufnahmeraum besonders bevorzugt auch durch den Übergangsraum.

Auch ist es möglich, dass ein entsprechendes Schwert- oder beziehungsweise eine Halteeinrichtung des Blasschlittens über die beiden oben erwähnten schlitzförmigen Öffnungen geführt wird. In der sterilen Umgebung des Aufnahmeraums ist der Blasschlitten mit dem Blaskolben verbunden und bewegt sich wie die oben erwähnte Halteeinrichtung beziehungsweise das Reckschwert innerhalb der Absaugorgel. Der Blaskolben wird vorteilhaft über den besagten Blasschlitten beziehungsweise eine stationär gelagerte Kurve angehoben. Bei einer weiteren vorteilhaften Ausführungsform steht der Aufnahmeraum in Strömungsänderung mit dem Reinraum. Weiterhin ist bevorzugt eine Absaugeinrichtung vorgesehen, um ein gasförmiges Medium aus dem Übergangsraum abzusaugen. Dabei kann diese Absaugeinrichtung vorteilhaft das gasförmige Medium in die (unsterile) Umgebung führen. Die Absaugeinrichtung kann dabei eine Ventileinrichtung aufweisen.

Bei einer weiteren vorteilhaften Ausführungsform ist die Reckstange exzentrisch gegenüber dem Aufnahmeraum angeordnet. Dabei ist vorteilhaft vorgesehen, dass der Aufnahmeraum ein bestimmtes Mindestvolumen aufweist, um dessen Sterilität zu sichern. Die Reckstange ist demgegenüber vorteilhaft exzentrisch geführt, um sie auf diese Weise vergleichsweise nahe an der Öffnung des Aufnahmeraums anordnen zu können.

Bei einer vorteilhaften Ausführungsform ist der Aufnahmeraum im Wesentlichen zylinderförmig ausgebildet. Die Reckstange ist innerhalb dieses Zylinders geführt, wobei diese vorteilhaft exzentrisch bezüglich des Mittelpunkts des zylinderförmigen Aufnahmeraums angeordnet ist.

Bei einer weiteren vorteilhaften Ausführungsform ist die Beaufschlagungseinrichtung wenigstens teilweise in dem Aufnahmeraum angeordnet. Vorzugsweise sind sowohl die Reckstange als auch die Beaufschlagungseinrichtung in dem Aufnahmeraum angeordnet.

Die vorliegende Erfindung ist weiterhin auf ein Verfahren zum Umformen von Kunststoffvorformlingen zu Kunststoffbehältnissen gerichtet, wobei die Kunststoffvorformlinge mit wenigstens einer Blasstation, welche an einer beweglichen Transporteinrichtung angeordnet ist, durch einen Reinraum transportiert werden und wenigstens zeitweise während dieses Transports mit einem gasförmigen Medium (und insbesondere Luft) zu deren Expansion beaufschlagt werden. Weiterhin werden die Kunststoffvorformlinge mittels einer Reckstange in ihrer Längsrichtung gedehnt, wobei die Reckstange gegenüber den Kunststoffvorformlingen in der Längsrichtung bewegt wird.

Erfindungsgemäß wird die Reckstange innerhalb eines Aufnahmeraums bewegt. Dieser Aufnahmeraum ist gegenüber einer unsterilen Umgebung mittels wenigstens einer Wandung abgetrennt. Weiterhin wird der Aufnahmeraum mit einem gasförmigen Medium beaufschlagt und ein Druck dieses gasförmigen Mediums innerhalb des Aufnahmeraums ist höher als Umgebungsdruck in einer unsterilen Umgebung. Vorteilhaft werden die Kunststoffvorformlinge mit Sterilluft beaufschlagt.

Bei einem bevorzugten Verfahren wird zum Bewegen der Reckstange gegenüber dem Kunststoffvorformling eine Halteeinrichtung, an der die Reckstange angeordnet ist und die sich bevorzugt durch eine Öffnung des Aufnahmeraums hindurch erstreckt gegenüber dem Aufnahmeraum bewegt. Vorteilhaft ist daher der Aufnahmeraum fest gegenüber der Transporteinrichtung und vorteilhaft auch in der Längsrichtung der Kunststoffvorformlinge fest gegenüber den einzelnen Blasstationen angeordnet. Vorteilhaft ist dabei die Reckstange fest an der besagten Halteeinrichtung angeordnet.

Weitere Vorteile und Ausführungsformen ergeben sich aus den beigefügten Zeichnungen. Darin zeigen:
- Fig. 1: eine schematische Darstellung einer Anlage zum Herstellen von Kunststoffbehältnissen;
- Fig. 2: eine Ansicht eines Reinraums im Bereich einer Blasstation;
- Fig. 3: eine Darstellung einer Reckeinheit nach dem internen Stand der Technik der Anmelderin;
- Fig. 4: eine Draufsicht auf eine erfindungsgemäße Reckeinheit;
- Fig. 5: eine Seitenansicht der Reckeinheit aus Fig. 4;
- Fig. 6: eine perspektivische Ansicht der in Fig. 5 gezeigten Reckeinheit;
- Fig. 7: eine schematische Darstellung einer erfindungsgemäßen Reckeinheit;
- Fig. 8a, 8b: 2 perspektivische Darstellungen einer erfindungsgemäßen Reckeinheit.

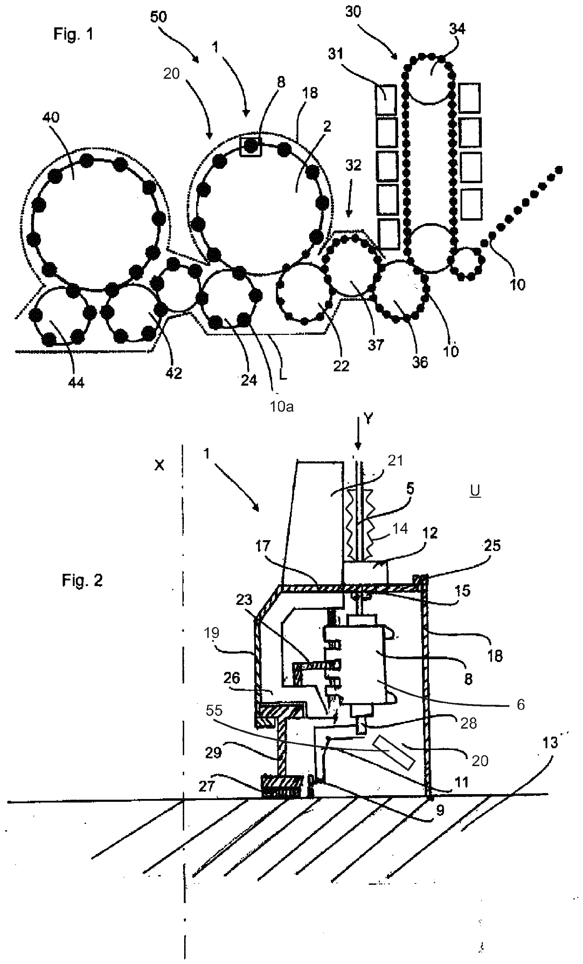

Figur 1 zeigt eine schematische Darstellung einer Anlage zum Herstellen von Kunststoffbehältnissen nach dem Stand der Technik. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. In einer weiteren bevorzugten Ausführungsform ist der Reinraum 20 nicht nur im Bereich des Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums strömt und so verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 20 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 nach dem Stand der Technik im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 20 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 20 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg 14 vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen. Diese Sterilisationseinrichtung bzw. Beaufschlagungseinrichtung 55 kann sich am Transportrad 2 oder an der stehenden Wandung 18 befinden oder generell stationär angeordnet sein und aus Düsen oder ähnlichem bestehen. Zudem ist es vorteilhaft, Sterilluft zum Sterilisieren des Reinraums 20 über das Lüftungssystem in den Reinraum 20 einzubringen.

Die (nicht gezeigten) Blasformen sind innerhalb der Blasformträger 6 angeordnet. Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

Es wäre jedoch auch (anders als in Fig. 2 gezeigt) möglich und bevorzugt, dass die Transporteinrichtung 2 bzw. der Träger einen C-förmigen Außenumfang aufweist, der auch teilweise die Außenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Außenwandung des Reinraums statt. Diese Außenwandung ist dabei vorteilhaft stationär angeordnet.

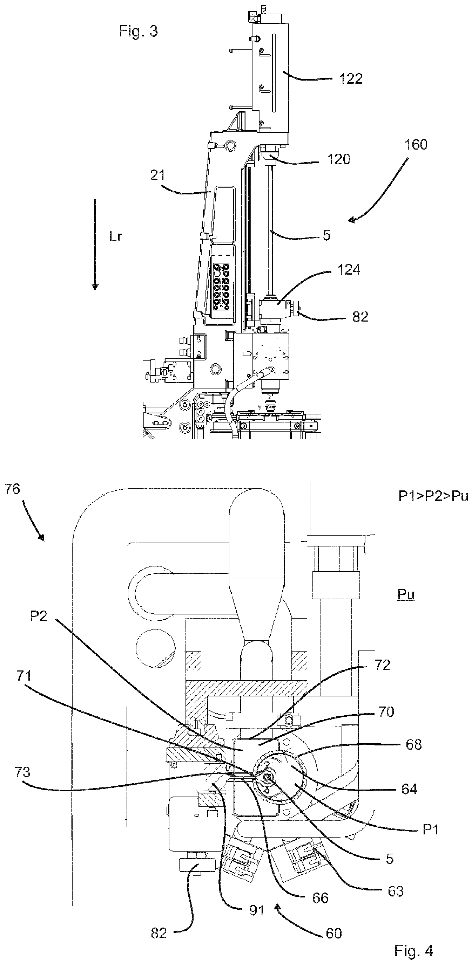

Figur 3 zeigt eine Seitenansicht einer Reckeinheit 160 nach dem internen Stand der Technik der Anmelderin. Diese Reckeinheit 160 weist dabei einen Träger 21 auf, an dem ein Reckschlitten 120 angeordnet ist. Mit diesem Reckschlitten wird wiederum eine Reckstange 5 geführt. Das Bezugszeichen 124 kennzeichnet einen Blasschlitten, d.h. einen Schlitten, der eine Blasdüse auf die Kunststoffvorformlinge aufsetzt. Das Bezugszeichen 82 kennzeichnet eine Führungsrolle, die beispielsweise gegenüber einer Führungskurve abrollen kann um so die Bewegung des Blasschlittens zu erreichen. Das Bezugszeichen 122 kennzeichnet eine Antriebseinrichtung, wie einen Linearmotor, der die Reckstangenbewegung antreibt. Anstelle des Linearmotors könnte jedoch auch ein pneumatischer oder hydraulischer Antrieb vorgesehen sein oder ebenfalls eine Reckkurve.

Das Bezugszeichen Lr in den Figuren bezieht sich auf die Bewegungsrichtung der Reckstange zum Recken der Kunststoffvorformlinge. Diese Bewegungsrichtung stimmt mit der Bewegungsrichtung der Beaufschlagungseinrichtung 12 und vorteilhaft auch mit der Längsrichtung der Kunststoffvorformlinge überein.

Figur 4 zeigt eine Draufsicht auf eine erfindungsgemäße Reckeinheit 60. Dabei ist wiederum die Reckstange 5 erkennbar, die sich in Fig. 4 senkrecht zu der Figurenebene bewegt um die Kunststoffvorformlinge (nicht gezeigt) zu dehnen. Diese Reckstange 5 bewegt sich innerhalb eines Aufnahmeraums 64, der hier zylinderförmig ausgebildet ist. Weiterhin weist dieser Aufnahmeraum 64 einen Öffnungsschlitz auf, durch welchen hindurch eine Halteeinrichtung 66 beziehungsweise ein die Reckstange 5 haltendes Schwert geführt wird. Innerhalb dieses Aufnahmeraums 64 herrscht ein Druck P1, der zumindest größer ist als ein Druck Pu, der unsterilen Umgebung außerhalb.

Das Bezugszeichen 70 kennzeichnet einen Übergangsraum durch den hindurch ebenfalls die Halteeinrichtung 66 geführt wird. Weiterhin steht dieser Übergangsraum in Strömungsverbindung mit dem Aufnahmeraum 64. In diesem Übergangsraum herrscht ein Druck P2, der geringer ist als der Druck P1, sodass Luftströmung lediglich von dem Aufnahmeraum 64 in den Übergangsraum 70 gelangen kann. Das Bezugszeichen 72 kennzeichnet eine Wandung, die einen Übergangsraum 70 abgrenzt. Entsprechend kennzeichnet das Bezugszeichen 68 eine Wandung, welche den Aufnahmeraum 64 abgrenzt. Über eine Abführeinrichtung 76, welche in Strömungsverbindung mit dem Übergangsraum 70 steht, kann das gasförmige Medium aus dem Übergangsraum 70 abgeführt werden. Dies ist insbesondere für Sterilisationprozesse relevant.

Das Bezugszeichen 91 kennzeichnet einen Reckschlitten, an dem wiederum die Halteeinrichtung 66 und die Reckstange 5 angeordnet ist, um so eine Bewegung zu ermöglichen. Das Bezugszeichen 82 kennzeichnet wiederum eine Kurvenrolle, die zum Bewegen der Blaseinheit dient.

Die Bezugszeichen 63 beziehen sich auf Ventileinheiten zum Zuführen der Blasluft.

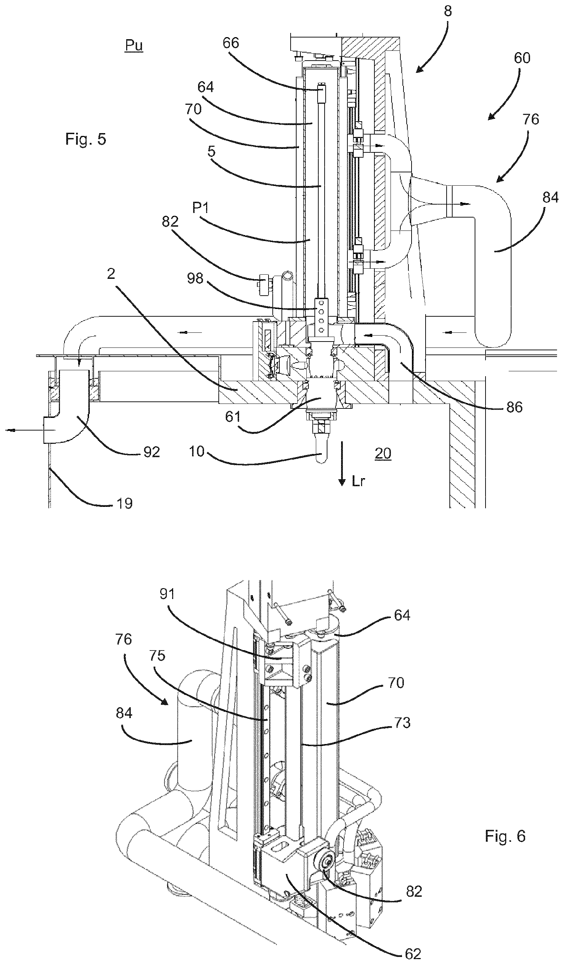

Figur 5 zeigt eine weitere Darstellung der Reckeinheit 60 wobei insbesondere die Strömungswege der Luft illustriert werden. Die in den Aufnahmeraum 64 einströmende Luft resultiert aus der Atmosphäre unterhalb der Blasstation 8. Die Abgrenzung zur Umwelt wird von einer stehenden Abdeckung gewährleistet. Die sterile Luft umspült innerhalb des Aufnahmeraums 64 die vollständige Reckstange sowie auch die Halteeinrichtung 66 (in Figur 5 nicht gezeigt) und auch das entsprechende Schwert des Blasschlittens, welches sich an den Körper 98 nach hinten anschließt. Das Bezugszeichen 61 kennzeichnet den Blaskolben, der an den Kunststoffvorformlingen 10 angesetzt wird. Das Bezugszeichen 20 kennzeichnet einen Reinraum. Das Bezugszeichen 19 kennzeichnet auch hier wieder eine stehende Abdichtung. Das Bezugszeichen 2, das drehende Blasrad.

Über eine Verbindungsleitung 86 gelangt die Luft von dem Reinraum 20 in den Aufnahmeraum 64. Über die beiden Öffnungen 71 und 73 (vergleiche Fig. 4) kann die kontaminierte Luft durch die angebundene Absaugung 76 angesaugt werden. Es gelangt daher keine unsterile beziehungsweise verschmutzte Luft ins System und umgekehrt im Sterilisationsprozess kein Wasserstoffperoxid aus dem System in die Umwelt. Die hier beschriebenen Vorgänge laufen, wie oben erwähnt, in der rotierenden Einheit. Abgesaugt werden kann über eine stehende Einheit. Für die Verbindung zwischen dem stehenden und dem bewegten Teil kann ein sogenanntes Wasserschloss als Dichtungseinrichtung vorgesehen sein. Das Bezugszeichen 84 bezieht sich auf eine Absaugleitung, die Bestandteil der Absaugeinrichtung 76 ist. Für die Abführleitung 92 wird schmutzige Luft aus der Vorrichtung 1 abgesaugt.

Figur 6 zeigt eine perspektivische Darstellung einer erfindungsgemäßen Reckeinheit 60. Dabei sind wieder der Aufnahmeraum 64 sowie der Übergangsraum 70 erkennbar. Auch erkennt man die Abführeinrichtung beziehungsweise Leitung 76, über die aus dem Übergangsraum Luft abgesaugt werden kann. Man erkennt, dass es sowohl der Schlitten 91 für die Reckstangenbewegung als auch der Schlitten 62 für die Blasdüsenbewegung von dem gleichen Träger 75 geführt werden. Daher ist hier der Schlitten 62 stets unterhalb des Schlittens 91 angeordnet.

Bei der in Figur 6 gezeigten Darstellung erkennt man, dass der Träger 75 und die Öffnung 73 quer zueinander ausgerichtet sind, d.h. bei dem Schlitten 91 und auch dem Schlitten 62 handelt es sich um ein Winkelteil.

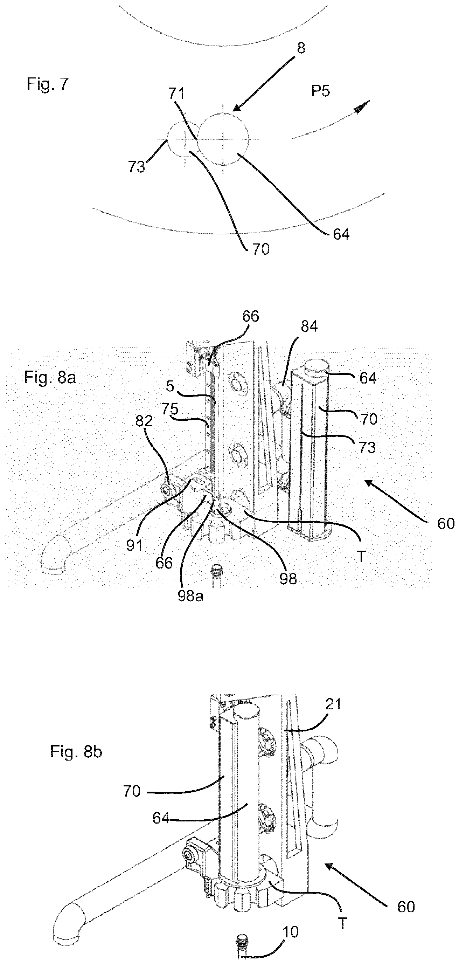

Figur 7 zeigt eine grob schematische Darstellung der erfindungsgemäßen Vorrichtung. Dabei kennzeichnet der Pfeil P5 die Bewegungsrichtung der einzelnen Blasstationen 8.

Weiterhin sind auch die beiden Schlitze beziehungsweise Öffnungen 71 und 73 des Aufnahmeraums 64 und des Übergangsraums 70 erkennbar. Man erkennt, dass diese Schlitze in der Bewegungsrichtung P5 jeweils entgegen der Bewegungsrichtung weisen.

Die Figuren 8a und 8b zeigen zwei Darstellungen der Reckstation, wobei in einer Darstellung (vergl. Fig. 8a) zur Veranschaulichung der Aufnahmeraum 64 und der Übergangsraum 70 getrennt von der Reckstange 5 dargestellt sind. In Fig. 8a erkennt man insbesondere wieder den Öffnungsschlitz 73, gegenüber dem die Halteeinrichtung 66 mit der Reckstange 5 bewegt wird.

Das Bezugszeichen 75 kennzeichnet einen Träger gegenüber dem der gesamte Schlitten mit der Halteeinrichtung 66 gleitet. Das Bezugszeichen 62 kennzeichnet den Schlitten für die Blaseinheit, der ebenfalls gegenüber dem Träger 75 gleitet. Das Bezugszeichen 98 kennzeichnet einerseits einen Führungskörper für die Reckstange 5, der jedoch eine Vielzahl von Öffnungen 98a aufweist, über welche ein Sterilisationsmittel in den Aufnahmeraum 64 geführt werden kann.

Figur 8b zeigt eine geschlossene Darstellung der erfindungsgemäßen Vorrichtung, wobei hier wiederum der Aufnahmeraum 64 und der Übergangraum 70 erkennbar sind.

Das Bezugszeichen T kennzeichnet in den jeweiligen Figuren jeweils die Trennebene zwischen dem unsterilen und dem sterilen Raum.

Vorzugsweise liegt die Atmosphäre innerhalb des Aufnahmeraums 64 um ca. 10 Pa höher als der Umgebungsdruck. Dabei wird vorteilhaft diese Atmosphäre innerhalb des Aufnahmeraums mit steriler Luft versorgt.

Der Druck innerhalb des Übergangsraums 70 liegt wie oben erwähnt unterhalb des Drucks innerhalb des Aufnahmeraums und vorteilhaft auch unterhalb des Umgebungsdrucks. Vorzugsweise liegt der Druck innerhalb des Übergangsraums bei ca. 5 Pascal unterhalb des Umgebungsdrucks.

Die einzelnen Antriebseinrichtungen für die Reckstange und/oder die Antriebseinrichtungen für die Blasdüsen und/oder Blaskolbenhebeeinrichtung liegen vorteilhaft außerhalb der Atmosphäre beziehungsweise außerhalb des Aufnahmeraums 64 und besonders bevorzugt auch außerhalb des Übergangsraums.

Man erkennt insbesondere an den Figuren, dass die Aufnahmeräume durch jeweils Kammern beziehungsweise Wände gegeneinander begrenzt werden.

Aus den einzelnen Druckverhältnissen ergibt sich, dass eine Strömung von dem Aufnahmeraum 64 in den Übergangsraum 70 und auch umgekehrt eine Strömung von der Umgebung in den Übergangsraum 70 stattfinden kann. Weiterhin ist es denkbar, dass eine Verbindung zwischen dem Aufnahmeraum 64 und der darunter angeordneten Atmosphäre besteht, d.h. insbesondere dem Reinraum, der hier ebenfalls vorteilhaft unter einem erhöhten Druck von bevorzugt ca. 10 Pa liegt.

Weiterhin ist es vorteilhaft auch möglich, dass die Reckstange 5 über die Halteeinrichtung 66 in einer horizontalen Ebene verstellt werden kann. Bei einer weiteren vorteilhaften Ausführungsform ist es auch möglich, dass der Aufnahmeraum 64 beziehungsweise die Absaugorgel abnehmbar ist, ohne hierzu die Reckeinheit selbst beziehungsweise die Reckstange 5 abzunehmen (vergl. Fig 8a). Wie insbesondere in Bezug auf Fig. 7 verdeutlicht, sind auch die einzelnen Schlitze beziehungsweise Öffnungen 71, 73 bevorzugt entgegen der Laufrichtung des Prozesses ausgerichtet.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Umformungsvorrichtung
- 2: Transportrad
- 5: Reckstange
- 6: Blasformträger
- 8: Blas-/Umformungsstationen
- 9: Führungskurve
- 10: Kunststoffvorformlinge
- 10a: Behältnisse
- 11: Folgeeinrichtung
- 12: Schlitten, Beaufschlagungseinrichtung
- 13: Boden
- 14: Faltenbalg
- 17: Deckel
- 18: weitere Wandung
- 19: Seitenwand
- 20: Reinraum
- 21: Halterung für Schlitten
- 22: Zuführeinrichtung
- 23: Halteeinrichtung
- 24: Abführeinrichtung
- 25: Dichtungseinrichtung
- 26: Träger
- 27: weitere Dichtungseinrichtung
- 28: Träger zum Tragen einer Bodenform
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage zum Herstellen von Kunststoffbehältnissen
- 55: Sterilisationseinrichtung
- 60: Reckeinheit
- 61: Blaskolben
- 62: Schlitten für Blasdüsenbewegung
- 63: Ventileinheit
- 64: Aufnahmeraum
- 66: Halteeinrichtung, Schwert
- 68: Wandung
- 70: Übergangsraum
- 71: Öffnung (Öffnungsschlitz) des Aufnahmeraums 64
- 72: Wandung des Übergangsraums
- 73: Öffnung (Öffnungsschlitz) des Übergangsraums
- 75: Träger
- 76: Abführeinrichtung
- 82: Führungsrolle
- 84: Absaugleitung
- 91: Schlitten für Reckstangenbewegung
- 92: Abführleitung
- 98: Körper
- 120: Reckschlitten
- 122: Antriebseinrichtung
- 124: Blasschlitten
- 160: Reckeinheit

- L: punktierte Linie
- Lr: Bewegungsrichtung der Reckstange 5
- U: unsterile Umgebung
- X: Schwenkachse
- Y: Schwenkwelle
- Z: dritte Schwenkachse
- P1: Druck im Aufnahmeraum
- P2: Druck im Übergangsraum
- P5: Bewegungsrichtung der Blasstationen
- Pu: Druck in der (unsterilen) Umgebung
- T: Trennebene

## Patentansprüche

1. Vorrichtung zum hygienischen Umformen von Kunststoffvorformlingen (10) zu Kunststoffbehältnissen (10a) mit wenigstens einer Blasstation (8), welche an einer beweglichen Transporteinrichtung (2) angeordnet ist, wobei die Blasstation (8) eine Blasform aufweist und diese Blasform einen Hohlraum ausbildet, in dessen Innerem die Kunststoffvorformlinge (10) durch Beaufschlagung mit einem gasförmigen Medium zu den Kunststoffbehältnissen (10a) expandierbar sind, mit einer Beaufschlagungseinrichtung (12, 62, 124), welche die Kunststoffvorformlinge (10) zu deren Expansion mit dem gasförmigen Medium beaufschlagt und mit einem Reinraum (20), der die Blasstation (8) zumindest teilweise umgibt, und mit einer Reckeinheit (60), welche die Kunststoffvorformlinge (10) entlang deren Längsrichtung (Lr) dehnt, wobei die Reckeinheit (60) eine gegenüber den Kunststoffvorformlingen (10) bewegbare Reckstange (5) aufweist, die in die Kunststoffvorformlinge (10) einführbar ist und die Reckeinheit (60) weiterhin eine Antriebseinrichtung (122) zum Bewegen der Reckstange (5) entlang deren Längsrichtung (Lr) aufweist,
**dadurch gekennzeichnet, dass**
es sich bei der Antriebseinrichtung zum Bewegen der Reckstange um einen Linearmotor handelt.

2. Vorrichtung (1) nach Anspruch 1,
**dadurch gekennzeichnet, dass**
die Blasstation (8) einen Aufnahmeraum (64) mit wenigstens einer Wandung (68) zum Aufnehmen der Reckstange (5) und/oder der Beaufschlagungseinrichtung (12) aufweist und die Reckstange (5) gegenüber diesem Aufnahmeraum (64) beweglich ist und die Antriebseinrichtung (122) vorteilhaft wenigstens zeitweise außerhalb dieses Aufnahmeraums (64) angeordnet ist, und wobei in diesem Aufnahmeraum (64) ein gasförmiges Medium mit einem Druck (P1) aufnehmbar ist, der oberhalb eines Umgebungsdrucks (Pu) einer unsterilen Umgebung dieses Aufnahmeraums (64) liegt.

3. Vorrichtung (1) nach Anspruch 1,
**dadurch gekennzeichnet, dass**
derjenige Bereich der Transporteinrichtung (2), an dem die Blasstationen (8) angeordnet sind, in dem Reinraum (20) angeordnet ist und wenigstens ein weiterer Bereich der Transporteinrichtung (2) außerhalb des Reinraums (20) angeordnet ist.

4. Vorrichtung (1) nach zumindest einem der vorhergehenden Ansprüche,
**dadurch gekennzeichnet, dass**
der Reinraum (20) wenigstens abschnittsweise ein ringförmiges Profil aufweist.

5. Vorrichtung (1) nach zumindest einem der vorhergehenden Ansprüche,
**dadurch gekennzeichnet, dass**
der Reinraum (20) von mehreren Wandungen (16, 17, 18) begrenzt ist und wenigstens eine dieser Wandungen (16) gegenüber einer weiteren Wandung (18) drehbar angeordnet ist.

6. Vorrichtung (1) nach zumindest einem der vorhergehenden Ansprüche,
**dadurch gekennzeichnet, dass**
der Reinraum (20) durch eine bewegliche Seitenwand (19) und einen einteilig mit dieser Seitenwand (19) ausgebildeten Deckel (17) abgeschlossen ist.

7. Vorrichtung (1) nach zumindest einem der vorhergehenden Ansprüche,
**dadurch gekennzeichnet, dass**
die Seitenwand (19) und der Deckel (17) sich mit der Blasstation (8) mit drehen.

8. Vorrichtung (1) nach zumindest einem der vorhergehenden Ansprüche,
**dadurch gekennzeichnet, dass**
die Reckstange (5) an einer Halteeinrichtung (66) angeordnet ist und sich diese Halteeinrichtung durch eine Wandung des Aufnahmeraums hindurch erstreckt.

9. Vorrichtung (1) nach wenigstens einem der vorangegangenen Ansprüche,
**dadurch gekennzeichnet, dass**
die Vorrichtung einen mittels wenigstens einer Wandung (72) gegenüber der Umgebung (U) abgetrennten Übergangsraum (70) aufweist, wobei dieser Übergangsraum (70) in Strömungsverbindung mit dem Aufnahmeraum (64) steht.

10. Vorrichtung (1) nach Anspruch 8,
**dadurch gekennzeichnet, dass** zwischen dem Aufnahmeraum (64) und dem Übergangsraum (70) eine Wandung angeordnet ist.

11. Vorrichtung (1) nach Anspruch 8,
**dadurch gekennzeichnet, dass**
sich die Halteeinrichtung (66) durch den Übergangsraum hindurch erstreckt.

12. Vorrichtung (1) nach wenigstens einem der vorangegangenen Ansprüche,
**dadurch gekennzeichnet, dass**
der Aufnahmeraum (64) in Strömungsverbindung mit dem Reinraum (20) steht.

13. Vorrichtung (1) nach Anspruch 8,
**dadurch gekennzeichnet, dass**
die Vorrichtung (1) eine Absaugeinrichtung (76) aufweist, um ein gasförmiges Medium aus dem Übergangsraum (70) abzusaugen.

14. Vorrichtung (1) nach wenigstens einem der vorangegangenen Ansprüche,
**dadurch gekennzeichnet, dass**
die Reckstange exzentrisch gegenüber dem Aufnahmeraum (64) angeordnet ist.

15. Vorrichtung (1) nach wenigstens einem der vorangegangenen Ansprüche,
**dadurch gekennzeichnet, dass**
die Beaufschlagungseinrichtung (12) wenigstens teilweise in dem Aufnahmeraum (64) angeordnet ist.

16. Verfahren zum hygienischen Umformen von Kunststoffvorformlingen (10) zu Kunststoffbehältnissen (10a), wobei die Kunststoffvorformlinge (10) mit wenigstens einer Blasstation (8), welche an einer beweglichen Transporteinrichtung (2) angeordnet ist durch einen Reinraum (20) transportiert werden und wenigstens zeitweise während dieses Transports mit einem gasförmigen Medium zu deren Expansion beaufschlagt werden, wobei die Kunststoffvorformlinge (10) weiterhin mittels einer Reckstange (5) in ihrer Längsrichtung (Lr) gedehnt werden, wobei die Reckstange (5) gegenüber den Kunststoffvorformlingen (10) in der Längsrichtung (Lr) der Reckstange (5) bewegt wird,
**gekennzeichnet durch**
eine Antriebseinrichtung (122) zum Bewegen der Reckstange, wobei es sich bei der Antriebseinrichtung (122) um einen Linearmotor handelt.
